# EUROPÄISCHE PATENTSCHRIFT

(11) **EP 1 970 699 B1**
(45) Veröffentlichungstag und Bekanntmachung des Hinweises auf die Patenterteilung: **17.02.2010**
(21) Anmeldenummer: 08102500.9
(22) Anmeldetag: 11.03.2008
(51) Int. Cl.: G01N 21/90, G01N 21/958

(54) **Vorrichtung und Verfahren zur Erfassung von Verunreinigungen auf einem transparenten Substrat**
Method and device for measuring impurities in a transparent substrate
Dispositif et procédé de détection d'impuretés sur un substrat transparent

(30) Priorität: 14.03.2007 DE 102007013086
(43) Veröffentlichungstag der Anmeldung: 17.09.2008
(73) Patentinhaber: SGS Institut Fresenius GmbH, 65232 Taunusstein (DE)
(72) Erfinder: Assmus, Uwe, 63454, Hanau (DE); Höschler, Birgit, 56370, Allendorf (DE); Nerowski, Bianca, 65197, Wiesbaden (DE)
(74) Vertreter: WSL Patentanwälte

(56) Entgegenhaltungen:
- EP-A- 0 569 464
- EP-A- 1 635 167
- GB-A- 758 850
- GB-A- 1 041 798
- US-A1- 2005 134 843

## Beschreibung

Die vorliegende Erfindung betrifft eine Vorrichtung zur Erfassung von Verunreinigungen auf einem zumindest teilweise transparenten Substrat sowie ein entsprechendes Verfahren.

Moderne Geschirreinigungsmittel sind multifunktionale Produkte, die neben der Reinigung verschmutzten Geschirrs in einer Spülmaschine gleichzeitig auch das Klarspülen und die Wasserenthärtung durch den Zusatz spezieller dafür geeigneter Tenside und Polymere leisten.

Für die Beurteilung der Leistungsfähigkeit eines solchen multifunktionalen Geschirrspülmittels für die maschinelle Geschirreinigung ist unter anderem die Klarspülleistung, insbesondere für Gläser, ausschlaggebend. Für diese Klarspülleistung sind in erster Linie die in den Geschirrspülmitteln vorhandenen Tenside verantwortlich. Diese sollen trotz der Zudosierung zu dem Geschirrspülmittel bereits im Hauptreinigungsgang ihre volle Wirkung erst im Klarspülgang entfalten. Kommt es im Ablauf der maschinellen Geschirreinigung zu Störungen oder entspricht das verwendete Geschirreinigungsmittel nicht den gestellten Anforderungen, so sind auf dem Geschirr nach dem Abschluß des Spülvorgangs kleine Flecken, als Spotting bezeichnet, sowie filmartige Beläge, als Filming bezeichnet, visuell wahrnehmbar.

Zur Bewertung der Spülleistung der entsprechenden Geschirrspülmittel werden im Stand der Technik primär visuelle Verfahren verwendet. Dafür wird je nach Anforderung unter ausgewählten Bedingungen (z. B. Wasserhärte, Ballastschmutz, Dosierung etc.) eine verbraucherrelevante Geschirrbeladung in einer Haushaltsspülmaschine mit dem zu testenden Produkt gespült, und anschließend wird das derart gespülte Geschirr durch Personen visuell beurteilt. Trotz standardisierter Auswerteverfahren, die insbesondere auf schematischen Auswertebögen basieren, kann es in Abhängigkeit von der Routine und Erfahrung der jeweiligen Testperson zu deutlichen Schwankungen bei der Beurteilung der Leistungsfähigkeit der Geschirrspülmittel kommen.

Aus der EP 1 635 167 A1 ist ein Verfahren zur quantitativen Messung von Ablagerungen auf festen Oberflächen bekannt, wobei die zu messende Oberfläche als planer Prüfling ausgebildet ist, beispielsweise in Form einer rechteckigen oder runden Platte, und mit sichtbarem Licht aus einer Lichtquelle bestrahlt wird, wobei das von dem Prüfling reflektierte und/oder gestreute Licht von einer Kamera aufgenommen wird und das so gewonnene Bild computergestützt quantitativ ausgewertet wird. Dabei offenbart dieses Dokument aus dem Stand der Technik sowohl Messungen in Reflexion als auch in Transmission. Dabei werden sowohl zur Beleuchtung des Substrates als auch zur Erfassung der vom Substrat reflektierten oder gestreuten Strahlung flächige Elemente eingesetzt.

Die aus dem Stand der Technik bekannten automatisierten Bewertungsverfahren beruhen auf der optischen Erfassung der Reflexions- und Streuprozesse an Spotting und Filming auf Testsubstraten nach dem maschinellen Geschirrspülvorgang. Dabei werden ausschließlich plane Substrate als Modelle für Geschirr aus Metall, Porzellan und Glas verwendet. Diese planen Modelle vermögen jedoch die tatsächliche Spülleistung der Geschirrspülmittel insbesondere für Gläser nur ungenügend wiederzugeben. Gerade das Klarspülen von Trinkgläsern stellt aber bei der maschinellen Geschirreinigung ein ernsthaftes Problem dar, welches unter anderem durch die aufgrund der hohlzylindrischen Grundform von Trinkgläsern bedingte Krümmung der zu reinigenden Oberflächen hervorgerufen wird. Die im Stand der Technik verwendeten planen Substrate sind zwar vergleichsweise einfach zu messen, stellen jedoch in Bezug auf Trinkgläser ein zu stark vereinfachendes Modell dar.

Aus der GB 1,041,798 ist eine Vorrichtung zur Erfassung von Verunreinigungen auf Milchflaschen bekannt, wobei die Anordnung eine die Glasflasche ringförmig umgebende Beleuchtungseinrichtung mit Suffittenlampen aufweist und im Inneren der Flasche eine ebenfalls ringförmige Anordnung von Fototransistoren als Detektoren vorgesehen ist.

Daher ist es Aufgabe der vorliegenden Erfindung gegenüber dem Stand der Technik, eine Vorrichtung und ein Verfahren zur Verfügung zu stellen, welches es ermöglicht, Verunreinigungen auf gekrümmten transparenten Oberflächen, insbesondere auf Trinkgläsern quantitativ zu erfassen.

Diese Aufgabe wird erfindungsgemäß dadurch gelöst, daß eine Vorrichtung zur Erfassung von Verunreinigungen auf einem zumindest teilweise transparenten Substrat, mit einer Quelle und einer Detektoranordnung für elektromagnetische Strahlung und mit einem Substrathalter für ein gekrümmtes Substrat, der so angeordnet ist, daß sich ein darin aufgenommenes gekrümmtes Substrat zumindest abschnittsweise zwischen der Quelle und der Detektoranordnung erstreckt, bereitgestellt wird, der Substrathalter so ausgestaltet ist, daß er die Aufnahme eines im

Wesentlichen hohlzylindrischen Substrats ermöglicht, wobei der Substrathalter so angeordnet ist, daß sich die Quelle oder die Detektoranordnung im Betrieb der Vorrichtung in dem hohlzylindrischen Substrat befindet, wobei die Detektoranordnung eine zeilenförmige Detektoranordnung ist, und wobei die Quelle eine Quelle für elektromagnetische Strahlung in einem Wellenlängenbereich von 350 nm bis 500 nm ist.

In einer Ausführungsform der Erfindung ist die Quelle für elektromagnetische Strahlung eine zeilenförmige Quelle.

Dabei wird im Sinne der vorliegenden Erfindung unter "zeilenförmig" eine flächige Ausdehnung der Quelle und der Detektoranordnung verstanden, die in einer ersten Richtung deutlich größer ist als in einer zweiten zu der ersten Richtung senkrechten Richtung.

Ein Beispiel für eine erfindungsgemäße zeilenförmige Quelle ist eine Anordnung einer Mehrzahl von nebeneinander, vorzugsweise in einer Reihe angeordneten Strahlungsquellen, vorzugsweise Leuchtdioden.

Ein Beispiel für eine zeilenförmige Detektoranordnung gemäß der vorliegenden Erfindung ist eine CCD- oder CMOS-Zeilenkamera.

Die zeilenförmige Ausgestaltung von Quelle und Detektoranordnung ermöglicht es, Verunreinigungen auf einem gekrümmten Substrat zu erfassen, ohne Artefakte aufgrund der Krümmung des Substrates gesondert numerisch berücksichtigen zu müssen.

Erstreckt sich die zeilenförmige Detektoranordnung im Wesentlichen parallel zu der Achse eines im Wesentlichen hohlzylinderförmigen Substrates, so wird immer nur ein, idealerweise sehr kleiner, Winkelausschnitt der Oberfläche des gekrümmten Substrates erfaßt, dessen Krümmung dann für den betrachteten Bereich vernachlässigbar klein ist, so daß in diesem Bereich von der Erfassung eines nahezu planen Substrates ausgegangen werden kann.

Dabei ist ein hohlzylinderförmiges Substrat im Sinne dieser Anmeldung ein Substrat mit einer Symmetrieachse, das eine zumindest um die Symmetrieachse herum gekrümmte Oberfläche aufweist, wie z.B. ein Trinkglases. Ein solches hohlzylindrisches Substrat kann darüber hinaus eine Krümmung in einer zweiten Richtung, wie z.B. bei einer Biertulpe, aufweisen.

In einer Ausführungsform der Erfindung weist die Vorrichtung einen Substrathalter auf, der so angeordnet ist, daß sich ein darin aufgenommenes Substrat zwischen der Lichtquelle und der Detektoranordnung erstreckt, d.h. eine Messung in Transmission durch das Substrat erfolgt.

Eine Ausführungsform der erfindungsgemäßen Vorrichtung ist insbesondere für die Erfassung von Verunreinigungen auf Trinkgläsern geeignet, wobei der Substrathalter so ausgestaltet ist, daß er die Aufnahme eines im Wesentlichen hohlzylindrischen Substrates ermöglicht, wobei sich die Quelle oder die zeilenförmige Detektoranordnung im Betrieb der Vorrichtung in dem hohlzylindrischen Substrat befindet. Auf diese Weise wird in Transmission nur ein sehr kleiner Ausschnitt des Hohlzylinders mit Hilfe der zeilenförmigen Detektoranordnung erfaßt.

Um dennoch die gesamte Substratoberfläche eines in dem Substrathalter aufgenommenen Substrates erfassen zu können, ist eine Ausführungsform der Erfindung zweckmäßig, bei welcher der Substrathalter eine Drehachse aufweist und so drehbar ist, daß ein in dem Substrathalter aufgenommenes im Wesentlichen hohlzylindrisches Substrat im Wesentlichen konzentrisch um die zeilenförmige Quelle oder die zeilenförmige Detektoranordnung herum drehbar ist.

Insbesondere ist eine Ausführungsform der Erfindung zweckmäßig, bei der sich die Zeile der Quelle und/oder der Detektoranordnung im Wesentlichen parallel zur Drehachse des Substrathalters erstreckt.

In einer Ausführungsform der Erfindung wird der von der zeilenförmigen Detektoranordnung erfaßte Ausschnitt des Substrates nur indirekt beleuchtet.

In einer Ausführungsform der Erfindung weist die Quelle daher eine räumliche Abstrahlung mit einem räumlichen Intensitätsmaximum auf, wobei das räumliche Intensitätsmaximum der Quelle gegenüber einer Verbindungslinie zwischen der Quelle und der Detektoranordnung, d.h. der direkten Sichtverbindung, verkippt ist. Vorteilhafterweise liegt diese Verkippung in einem Bereich von 1° bis 90°, bevorzugt in einem Bereich von 30° bis 40° und besonders bevorzugt bei etwa 35°. Dies ist insbesondere vorteilhaft für Ausführungsformen der Erfindung, bei welchen die Quelle im Inneren eines hohlzylindrischen Substrates angeordnet ist, das in dem Substrathalter aufgenommen ist.

Die Verkippung des Abstrahlungsmaximums aus der direkten Sichtverbindung zwischen Quelle und Detektoranordnung verhindert ein Überstrahlen, d.h. eine Sättigung der Detektoranordnung.

Darüber hinaus unterscheidet sich der bilderzeugende Mechanismus bei einer Messung mit indirekter Beleuchtung deutlich von einer reinen Transmissionsmessung. Bei einer reinen Transmissionsmessung wird das Substrat zumindest ausschnittsweise direkt beleuchtet, so daß das räumliche Intensitätsmaximum der Quelle im Wesentlichen in Richtung der Verbindungslinie (Sichtlinie) zwischen Quelle und Detektorzeile abgestrahlt wird. Daher führen Verunreinigungen auf einem transparenten Substrat, insbesondere Spotting und Filming auf einem Glas, die in einem Abschnitt des Substrats liegen, der von der Verbindungslinie zwischen Quelle und Detektor geschnitten wird, zu einer Verringerung der Transmission durch das transparente Substrat aufgrund von Absorption, Streuung und Reflexion an den Verunreinigungen. Diese Verringerung der Transmission wird von der Detektoranordnung als Verdunklung bestimmter Bereiche erfaßt. Diese Änderungen der Transmission sind verglichen mit der durch das Substrat transmittierten Leistung gering.

Demgegenüber führt eine indirekte Beleuchtung in einer Ausführungsform der Erfindung, beispielsweise durch Verkippen des räumlichen Intensitätsmaximums der Quelle gegenüber der Verbindungslinie zwischen Quelle und Detektor, dazu, daß bei einem sauberen Substrat im Wesentlichen keine Strahlung direkt, d.h entlang der Verbindungslinie zwischen der Quelle und dem Detektor, durch das Substrat transmittiert wird. Erst Verunreinigungen auf dem Substrat, die im Bereich des Bildfeldes der Detektoranordnung liegen, führen zu einer Streuung von Strahlung, die von der Quelle abgestrahlt und an einem außerhalb des Sichtfeldes des Detektors liegenden Abschnitt des Substrates reflektiert oder gestreut wird, in das Bildfeld der zeilenförmigen Detektoranordnung. Daher erscheinen Verunreinigungen auf dem Substrat bei einer solchen Anordnung mit indirekter Beleuchtung in dem von der Detektoranordnung aufgenommenen Bild als helle Bereiche. Da bei einem sauberen Substrat keine Strahlung auf die Detektoranordnung fällt, führen bereits geringe Verunreinigungen zu einem deutlichen Kontrast der Verunreinigungen gegenüber den sauberen Bereichen des Substrats.

Darüber hinaus wird ein gegenüber der Verbindungslinie zwischen Quelle und Detektoranordnung verkipptes räumliches Intensitätsmaximum an der Substratoberfläche eines in dem Substrathalter aufgenommenen, im Wesentlichen hohlzylindrischen Substrats diffus gestreut bzw. reflektiert, so daß die außerhalb des Substrates angeordnete Detektoranordnung die zeilenförmige Quelle als diffuse und homogene Beleuchtung des Substrates wahrnimmt.

In einer Ausführungsform ist die Quelle aus einer Mehrzahl von nebeneinander, vorzugsweise in einer Reihe, angeordneten Quellen, beispielsweise Leuchtdioden, aufgebaut.

Gemäß einer weiteren Ausführungsform der Erfindung ist die Quelle eine Quelle für elektromagnetische Strahlung in einem Wellenlängenbereich von 350 nm bis 500 nm, vorzugsweise bei 435 nm. Dieser Wellenlängenbereich ermöglicht eine möglichst homogene Ausleuchtung des von der zeilenförmigen Detektoranordnung erfaßten Substratausschnittes, d.h. eine gleichmäßige räumliche Intensitätsverteilung des erfaßten Bereichs. Er liefert darüber hinaus die besten Kontraste für Verunreinigung auf Glasoberflächen, da in dem genannten Wellenlängenbereich die Verunreinigungen auf dem Substrat, insbesondere Rückstände eines Geschirrspülmittels die stärkste Streuung zeigen.

Die vorliegende Aufgabe wird darüber hinaus durch ein Verfahren zur Erfassung von Verunreinigungen auf einem zumindest teilweise transparenten Substrat gelöst, wobei Verunreinigungen auf einer gekrümmten Substratoberfläche, vorzugsweise der Oberfläche eines Trinkglases mit Hilfe einer Quelle für elektromagnetische Strahlung und einer Detektoranordnung erfaßt werden, wobei Verunreinigungen auf einem im Wesentlichen hohlzylinderförmigen Substrat erfaßt werden, wobei das hohlzylinderförmige Substrat im Wesentlichen konzentrisch um die Quelle oder um die Detektoranordnung herum angeordnet ist, wobei die Detektoranordnung eine zellenförmige Detektoranordnung ist, und wobei die Quelle eine Quelle für elektromagnetische Strahlung in einem Wellenlängenbereich von 350 nm bis 500 nm ist.

Dabei ist eine Ausführungsform des Verfahrens zweckmäßig, bei welchem das im Wesentlichen hohlzylinderförmige Substrat während der Erfassung um seine Zylinderachse gedreht wird, um die gesamte Oberfläche eines Substrates, beispielsweise eines Trinkglases, als Abwicklung zu erfassen.

Weitere Vorteile, Merkmale und Anwendungsmöglichkeiten der vorliegenden Erfindung werden anhand der folgenden Beschreibung einer bevorzugten Ausführungsform und der dazugehörigen Figuren deutlich.

Figur 1 zeigt eine seitliche schematische Ansicht einer Ausführungsform der erfindungsgemäßen Vorrichtung.

Figur 2 zeigt eine schematische Schnittansicht der Vorrichtung aus Figur 1 in einer Ebene senkrecht zu der in Figur 1 gezeigten Ansicht.

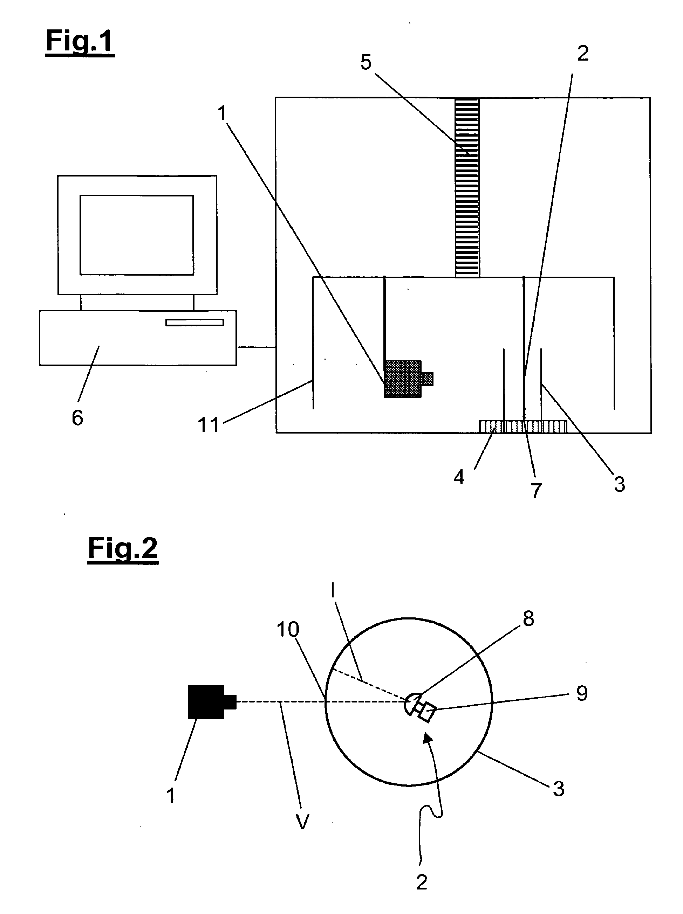

In Figur 1 ist eine Ausführungsform der erfindungsgemäßen Vorrichtung schematisch dargestellt. Grundelemente der Vorrichtung sind eine Zeilenkamera 1 sowie eine zeilenförmige Beleuchtungsquelle 2. Während die Zeilenkamera 1 außerhalb eines zu testenden Substrats, hier eines Trinkglases 3, angeordnet ist, ist die zeilenförmige Beleuchtungsquelle 2 so angeordnet, daß die zeilenförmige Quelle konzentrisch von einem zu erfassenden Trinkglas 3 umgeben ist. Dabei erstreckt sich die Zeile im Wesentlichen parallel zur Symmetrieachse des Glases 3.

Um einen automatisierten Betrieb der Vorrichtung zu ermöglichen, kann die Anordnung aus der Beleuchtungsquelle 2 und der Zeilenkamera 1 mit Hilfe eines Linearverstellers 5 in der Höhe eingestellt werden, so daß nach dem Aufstellen eines Trinkglases 3 auf den Substrathalter 4 die zeilenförmige Beleuchtung 2 automatisch in das Trinkglas 3 abgesenkt werden kann und nach Abschluß der Messung wieder aus diesem herausgezogen werden kann. Dabei ist am unteren Ende 7 der Beleuchtung 2 ein optischer Meßsensor vorgesehen, der im Zusammenwirken mit der Steuerung der Vorrichtung verhindert, daß die Beleuchtung 2 gegen den Boden des Trinkglases 3 stößt.

Die Meßanordnung aus Zeilenkamera 1 und Beleuchtung 2 ist von einer mit der Anordnung in der Höhe bewegbaren Streulichtkabine 11 umgeben, welche im Betrieb, d.h. während einer Messung, das Einfallen von Streulicht von außen verhindert und darüber hinaus Streulicht der Quelle 2 absorbiert.

Der dargestellte Substrathalter 4 besteht aus einer zu der zeilenförmigen Beleuchtung 2 konzentrisch montierten und um diese Achse durch einen Motor angetriebenen, drehbaren Scheibe, auf der ein Trinkglas 3 aufgenommen werden kann.

Um eine zentrierte Aufnahme von Trinkgläsern 3 mit unterschiedlichen Durchmessern am Fuß zu ermöglichen, weist die Substrataufnahme um die Drehachse konzentrische konische Vertiefungen auf, deren Tiefe vom Rand des Substrathalters 4 hin zur Drehachse zunimmt. Dadurch werden auf dem Substrathalter 4 angeordnete Gläser selbst zentriert. In der dargestellten Ausführungsform ist diese konische Ausnehmung stufenförmig ausgeführt, so daß die konische Form nur genähert realisiert ist. Diese stufenförmige Ausgestaltung ermöglicht eine gute Fixierung von Gläsern mit unterschiedlichem Durchmesser.

In Figur 2 ist schematisch eine Draufsicht auf die in Figur 1 dargestellte Anordnung gezeigt, um die Ausrichtung der Kamerazeile und der Beleuchtungsquelle sowie den Aufbau der Beleuchtungsquelle detaillierter zu beschreiben.

Deutlich zu erkennen ist die Anordnung der zeilenförmigen Beleuchtungsquelle 2 innerhalb des zu messenden Trinkglases 3, wobei die Beleuchtungsquelle 2 in etwa mit der Symmetrieachse des hohlzylinderförmigen Trinkglases 3 und der Drehachse des Substrathalters 4 zusammenfällt.

In der dargestellten Ausführungsform ist die zeilenförmige Beleuchtung aus einer Reihe von nebeneinander angeordneten Leuchtdioden 8, die an einem Träger 9 befestigt sind, aufgebaut. Die verwendeten Leuchtdioden 8 weisen eine räumliche Abstrahlcharakteristik für die erzeugte elektromagnetische Strahlung mit einem Maximum nach vorne auf. Dabei ist die Richtung des räumlichen Intensitätsmaximums in Figur 2 durch die mit I gekennzeichnete Linie dargestellt. Demgegenüber ist die direkte Verbindungslinie zwischen zeilenförmiger Beleuchtungsquelle 2 und zeilenförmiger Detektoranordnung bzw. Kamera 1 in Figur 2 mit V bezeichnet. Deutlich ist erkennbar, daß in der dargestellten Ausführungsform das abgestrahlte räumliche Intensitätsmaximum gegenüber der Verbindungslinie V um 35° verdreht ist. Auf diese Weise wird der sich im Bildfeld der Detektoranordnung 1 befindliche Glasausschnitt 10 von der Beleuchtungsanordnung 2 im Wesentlichen indirekt beleuchtet. Die in Richtung I abgestrahlte maximale Intensität wird an der Innenfläche des Trinkglases 3 reflektiert und gestreut und beleuchtet indirekt, aber homogen, den Glasausschnitt 10, der von der Kamera 1 erfaßt wird.

Für eine quantitative Erfassung von Flecken und Filmen, d.h. Spülmittelrückständen, auf dem Trinkglas 3 wird zunächst eine Kalibrierungsmessung mit einem identischen Trinkglas, das jedoch keine Rückstände aufweist, durchgeführt. Bei jeder Messung wird das zu messende Trinkglas 3 um seine Achse gedreht, wobei während der Drehung die Kamerazeile 1 jeweils den auf der Verbindungslinie V liegenden Bildausschnitt des Trinkglases erfaßt und so Ausschnitt für Ausschnitt eine Abwicklung des Glases mißt. Die Steuerung der Vorrichtung sowie die quantitative Auswertung der erfaßten Abwicklung des verunreinigten Trinkglases 3 erfolgt mit Hilfe eines Personalcomputers 6.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die vorangegangene Beschreibung viele Einzelheiten enthält, sollen diese nicht als Beschränkungen des Schutzbereiches der Erfindung verstanden werden, sondern vielmehr als eine beispielhafte Beschreibung einer bevorzugten Ausführungsform der Erfindung. Viele andere Varianten sind möglich. Entsprechend sollte der Schutzbereich der Erfindung nicht durch die dargestellte Ausführungsform sondern durch die beigefügten Ansprüche und ihre rechtlichen Äquivalente definiert werden.

### Bezugszeichenliste

- 1: Zeilenkamera
- 2: zeilenförmige Beleuchtungsquelle
- 3: Trinkglas
- 4: Substrathalter
- 5: Linearversteller
- 6: Personalcomputer
- 7: unteres Ende der Beleuchtung
- 8: Leuchtdiode
- 9: Träger
- 10: Glasausschnitt im Gesichtsfeld der Zeilenkamera
- 11: Streulichtkabine

## Patentansprüche

1. Vorrichtung zur Erfassung von Verunreinigungen auf einem zumindest teilweise transparenten Substrat, mit einer Quelle (2) und einer Detektoranordnung (1) für elektromagnetische Strahlung und mit einem Substrathalter (4) für ein gekrümmtes Substrat, der so angeordnet ist, daß sich ein darin aufgenommenes gekrümmtes Substrat zumindest abschnittsweise zwischen der Quelle (2) und der Detektoranordnung (1) erstreckt, wobei der Substrathalter (4) so ausgestaltet ist, daß er die Aufnahme eines im Wesentlichen hohlzylindrischen Substrates ermöglicht, und wobei der Substrathalter (4) so angeordnet ist, daß sich die Quelle oder die Detektoranordnung (1) im Betrieb der Vorrichtung in dem hohlzylindrischen Substrat befindet, **dadurch gekennzeichnet, daß** die Detektoranordnung eine zeilenförmige Detektoranordnung ist und daß die Quelle (1) eine Quelle für elektromagnetische Strahlung in einem Wellenlängenbereich von 350 nm bis 500 nm ist.

2. Vorrichtung nach Anspruch 1, **dadurch gekennzeichnet, daß** die Quelle für elektromagnetische Strahlung eine zeilenförmige Quelle (2) ist.

3. Vorrichtung nach Anspruch 1 oder 2, **dadurch gekennzeichnet, daß** der Substrathalter (4) um eine Drehachse drehbar ist, wobei ein im Wesentlichen hohlzylindrisches, in dem Substrathalter aufgenommenes Substrat im Wesentlichen konzentrisch um die Quelle oder die zeilenförmige Detektoranordnung (1) herum drehbar ist.

4. Vorrichtung nach Anspruch 3, **dadurch gekennzeichnet, daß** sich die Zeile der Quelle (2) und/oder der Detektoranordnung (1) im Wesentlichen parallel zur Drehachse des Substrathalters erstreckt.

5. Vorrichtung nach einem der Ansprüche 1 bis 4, **dadurch gekennzeichnet, daß** die Quelle (2) für elektromagnetische Strahlung eine Mehrzahl von nebeneinander, vorzugsweise in einer Reihe angeordneten Strahlungsquellen (8), vorzugsweise Leuchtdioden, aufweist.

6. Vorrichtung nach einem der Ansprüche 1 bis 5, **dadurch gekennzeichnet, daß** die Quelle (2) eine räumliche Abstrahlung mit einem räumlichen Intensitätsmaximum aufweist, wobei das räumliche Intensitätsmaximum der Quelle (2) gegenüber einer Verbindungslinie (V) zwischen der Quelle (2) und der Detektoranordnung (1) verkippt ist und zwar vorzugsweise um 30° bis 40° und besonders bevorzugt um etwa 35°.

7. Vorrichtung nach einem der Ansprüche 1 bis 6, **dadurch gekennzeichnet, daß** die Quelle (1) eine Quelle für elektromagnetische Strahlung in einem Wellenlängenbereich bei etwa 435 nm ist.

8. Verfahren zur Erfassung von Verunreinigungen auf einem zumindest teilweise transparenten Substrat, **dadurch gekennzeichnet, daß** Verunreinigungen auf einem zumindest teilweise gekrümmten Substrat mit Hilfe einer Quelle (2) für elektromagnetische Strahlung und einer Detektoranordnung (1) erfaßt werden, wobei Verunreinigungen auf einem Im Wesentlichen hohlzylinderförmigen Substrat erfaßt werden und wobei das hohlzylinderlörmige Substrat im Wesentlichen konzentrisch um die Quelle (2) oder um die Detektoranordnung (1) herum angeordnet ist, **dadurch gekennzeichnet, daß** die Detektoranordnung eine zeilenförmige Detektoranordnung ist und die Quelle (1) eine Quelle für elektromagnetische Strahlung in einem Wellenlängenbereich von 350 nm bis 500 nm ist.

9. Verfahren nach Anspruch 8, **dadurch gekennzeichnet, daß** das im Wesentlichen hohlzylinderförmige Substrat (3) während der Erfassung um seine Zylinderachse gedreht wird.

10. Verwendung einer Vorrichtung nach einem der Ansprüche 1 bis 7, **dadurch gekennzeichnet, daß** sie zur Erfassung von Verunreinigungen auf einem Trinkglas verwendet wird.

## Claims

1. A device for detecting contamination on an at least partially transparent substrate comprising a source (2) and a detector arrangement (1) for electromagnetic radiation, and a substrate holder (4) for a curved substrate, which is so arranged that a curved substrate accommodated therein extends at least portion-wise between the source (2) and the detector arrangement (1), wherein the configuration of the substrate holder (4) is such that it permits a substantially hollow-cylindrical substrate to be accommodated, and wherein the substrate holder (4) is so arranged that in operation of the device the source or the detector arrangement (1) is in the hollow-cylindrical substrate, **characterised in that** the detector arrangement is a line-form detector arrangement and the source (1) is a source for electromagnetic radiation in a wavelength range of 350 nm to 500 nm.

2. A device according to claim 1 **characterised in that** the source for electromagnetic radiation is a line-form source (2).

3. A device according to claim 1 or claim 2 **characterised in that** the substrate holder (4) is rotatable about an axis of rotation, wherein a substantially hollow-cylindrical substrate accommodated in the substrate holder is rotatable substantially concentrically around the source or the line-form detector arrangement (1).

4. A device according to claim 3 **characterised in that** the line of the source (2) and/or the detector arrangement (1) extends substantially parallel to the axis of rotation of the substrate holder.

5. A device according to one of claims 1 to 4 **characterised in that** the source (2) for electromagnetic radiation has a plurality of radiation sources (8) arranged in mutually juxtaposed relationship, preferably in a row, preferably light emitting diodes.

6. A device according to one of claims 1 to 5 **characterised in that** the source (2) has a spatial radiation emission with a spatial intensity maximum, wherein the spatial intensity maximum of the source (2) is tilted with respect to a connecting line (V) between the source (2) and the detector arrangement (1), more specifically preferably through 30° to 40° and particularly preferably through about 35°.

7. A device according to one of claims 1 to 6 **characterised in that** the source (1) is a source for electromagnetic radiation in a wavelength range at about 435 nm.

8. A method of detecting contamination on an at least partially transparent substrate, **characterised in that** contamination on an at least partially curved substrate is detected by means of a source (2) for electromagnetic radiation and a detector arrangement (1), wherein contamination on a substantially hollow-cylindrical substrate is detected and wherein the hollow-cylindrical substrate is arranged substantially concentrically around the source (2) or the detector arrangement (1), **characterised in that** the detector arrangement is a line-form detector arrangement and the source (1) is a source for electromagnetic radiation in a wavelength range of 350 nm to 500 nm.

9. A method according to claim 8 **characterised in that** the substantially hollow-cylindrical substrate (3) is rotated about the axis of its cylinder during the detection operation.

10. Use of a device according to one of claims 1 to 7 **characterised in that** it is used for detecting contamination on a drinking glass.

## Revendications

1. Equipement pour détecter des contaminations sur un substrat au moins en partie transparent, avec une source (2) et un dispositif détecteur (1) de rayonnement électromagnétique et avec un panier (4) de lavage pour un substrat incurvé, lequel est agencé de telle sorte qu'un substrat incurvé logé dans celui-ci s'étende au moins par tronçons entre la source (2) et le dispositif détecteur (1), le panier (4) de lavage étant agencé de telle sorte qu'un substrat essentiellement en forme de cylindre creux puisse y être logé, et le panier (4) de lavage étant agencé de telle sorte que la source ou le dispositif détecteur (1) se trouve dans le substrat en forme de cylindre creux lorsque l'équipement est en service, **caractérisé en ce que** le dispositif détecteur est un dispositif détecteur linéaire et **en ce que** la source (1) est une source de rayonnement électromagnétique dans une gamme d'ondes de 350 nm à 500 nm.

2. Equipement selon la revendication 1, **caractérisé en ce que** la source de rayonnement électromagnétique est une source linéaire (2).

3. Equipement selon la revendication 1 ou 2, **caractérisé en ce que** le panier (4) de lavage peut tourner autour d'un axe de rotation, un substrat essentiellement en forme de cylindre creux logé dans le panier de lavage pouvant tourner pour l'essentiel concentriquement autour de la source ou du dispositif détecteur linéaire (1).

4. Equipement selon la revendication 3, **caractérisé en ce que** la ligne de la source (2) et/ou du dispositif détecteur (1) s'étend pour l'essentiel parallèlement à l'axe de rotation du panier de lavage.

5. Equipement selon l'une des revendications 1 à 4, **caractérisé en ce que** la source (2) de rayonnement électromagnétique présente une pluralité de sources (8) de rayonnement, rangées de préférence l'une à côté de l'autre, de préférence des diodes luminescentes.

6. Equipement selon l'une des revendications 1 à 5, **caractérisé en ce que** la source (2) présente un rayonnement spatial avec un maximum d'intensité spatial, le maximum d'intensité spatial de la source (2) étant incliné par rapport à une ligne de jonction (V) entre la source (2) et le dispositif détecteur (1), et ce de préférence de 30° à 40° et en particulier de préférence d'environ 35°.

7. Equipement selon l'une des revendications 1 à 6, **caractérisé en ce que** la source (1) est une source de rayonnement électromagnétique dans une gamme d'ondes à environ 435 nm.

8. Procédé pour détecter des contaminations sur un substrat au moins en partie transparent, **caractérisé en ce que** des contaminations sont détectées sur un substrat au moins en partie incurvé à l'aide d'une source (2) de rayonnement électromagnétique et d'un dispositif détecteur (1), des contaminations étant détectées sur un substrat essentiellement en forme de cylindre creux et le substrat en forme de cylindre creux étant disposé pour l'essentiel concentriquement autour de la source (2) ou autour du dispositif détecteur (1), **caractérisé en ce que** le dispositif détecteur est un dispositif détecteur linéaire et **en ce que** la source (1) est une source de rayonnement électromagnétique dans une gamme de longueur d'onde de 350 nm à 500 nm.

9. Procédé selon la revendication 8, **caractérisé en ce que** le substrat (3) en forme de cylindre creux est tourné autour de son axe de cylindre pendant la détection.

10. Utilisation d'un équipement selon l'une des revendications 1 à 7, **caractérisée en ce qu'**il est utilisé pour détecter des contaminations sur un verre à boire.
